# EUROPEAN PATENT APPLICATION

(11) **EP 2 993 546 A1**
(43) Date of publication of application: **09.03.2016**
(21) Application number: 15179693.5
(22) Date of filing: 04.08.2015
(51) Int. Cl.: G05D 16/02, G05D 16/06

(54) **PRESSURE REGULATOR**

(30) Priority: 12.08.2014 JP 2014164392
(71) Applicant: Azbil Kimmon Co., Ltd., Tokyo 170-0004 (JP)
(72) Inventor: KOBAYASHI, Tomoyuki, Tokyo, Tokyo 170-0004 (JP)
(74) Representative: Tischner, Oliver

(57) **Abstract**

[Problem(s)] To provide a governor capable of preventing damage to parts when the pressure in the primary side channel rapidly rises, and of alleviating pressure fluctuation in the secondary side channel.

[Solution] A governor 1 is provided with a non-return valve 19 at a shield plate 16 such that when the pressure in the primary side channel 2 rapidly rises, the fluid from the primary side channel 2, which has passed through the port 4, can immediately flow into the pressure detection chamber 13 through the non-return valve 19. As a result, when the pressure in the primary side channel 2 rapidly rises, the governor 1 is capable of entering a closed valve state within a short amount of time.

## Description

### [Technical Field]

The present invention pertains to a governor provided between a primary side channel and a secondary side channel to circulate fluid from the primary side channel to the secondary side channel while adjusting the pressure in the secondary side channel.

### [Prior Art]

To circulate fluid while adjusting the fluid pressure, a diaphragm governor is installed at the connection between the primary side piping (primary side channel) and the secondary side piping (secondary side channel). See, for example, Patent Document 1. A diaphragm governor is configured such that a valve is interlocked with a diaphragm that is displaced according to the pressure in the secondary side channel, which is detected by a pressure detector, and when the detector detects a drop in the pressure in the secondary side channel, the valve opens, and when the detector detects a rise in the pressure in the secondary side channel, the valve shuts. The pressure detector is connected to the secondary side channel through an adjusting tube, and pressure can be conducted from the secondary side channel to the pressure detector.

### [Prior Art Documents]

### [Patent Documents]

[Patent Document 1] Japanese Unexamined Patent Application Publication No. H11-212655 A

### [Outline of the Invention]

### [Problem(s) To Be Solved By the Invention]

With a governor configured as described above, when the pressure in the primary side channel rapidly rises with the valve in an open state, the high-pressure fluid flows through the secondary side channel and the adjusting tube to the pressure detector. Then, because the pressure in the pressure detector rapidly rises, the valve shuts, but because time passes until the high-pressure fluid passes through the secondary side channel and the adjusting tube and reaches the pressure detector, time also passes between the rapid rise of the pressure in the primary side channel and the shutting of the valve, and the response of the governor is therefore inferior. In addition, because time passes until the valve shuts, a considerable amount of high-pressure fluid flows through the secondary side channel and adjusting tube to the pressure detector, and the pressure in the pressure detector sharply rises all at once.

As a result, when the pressure in the primary side channel rapidly rises, a large force impacts the parts involved in the valve shutting operation, thereby damaging said parts, and the pressure fluctuation in the primary side channel is accompanied by significant fluctuation also in the secondary side channel.

An object of the present invention is to solve the above problems by providing a governor capable of preventing damage to parts when the pressure in the primary side channel rapidly rises, and of alleviating pressure fluctuation in the secondary side channel.

### [Means for Solving the Problem(s)]

The governor according to the present invention is provided with a pressure detection chamber, which connects to the secondary side channel through the adjusting tube; a diaphragm, which divides the inside and outside of the pressure detection chamber and is displaced according to the pressure in the pressure detection chamber; a valve stem provided at one end of a valve body and which moves in proportion to the displacement of the diaphragm; a connecting part, which connects the diaphragm and the valve stem and transmits the diaphragm displacement to the valve stem; and a non-return valve provided further upstream than the connection between the secondary side channel and the adjusting tube and which sends the fluid inside the secondary side channel to the pressure detection chamber.

### [Effect of the Invention]

According to the present invention, a non-return valve is provided further upstream than the connection between the secondary side channel and the adjusting tube, and because the non-return valve is capable of passing fluid from the primary side channel, which is further upstream than the adjusting tube, to the pressure detection chamber, when the pressure in the primary side channel rapidly rises, the governor switches to a closed state within a short amount of time, and as a result, damage to connected parts and other such parts can be prevented, and pressure fluctuation in the secondary side channel can be alleviated.

### [Brief Description of the Drawings]

FIG. 1 is a cross-sectional view showing a governor according to an Embodiment 1 of the present invention.
FIG. 2 is an enlarged cross-sectional view of key parts of the governor according to Embodiment 1 of the present invention.
FIG. 3 is a cross-sectional view showing a governor as a reference example to facilitate an understanding of the governor according to Embodiment 1 of the present invention.

### [Embodiments of the Invention]

### Embodiment 1.

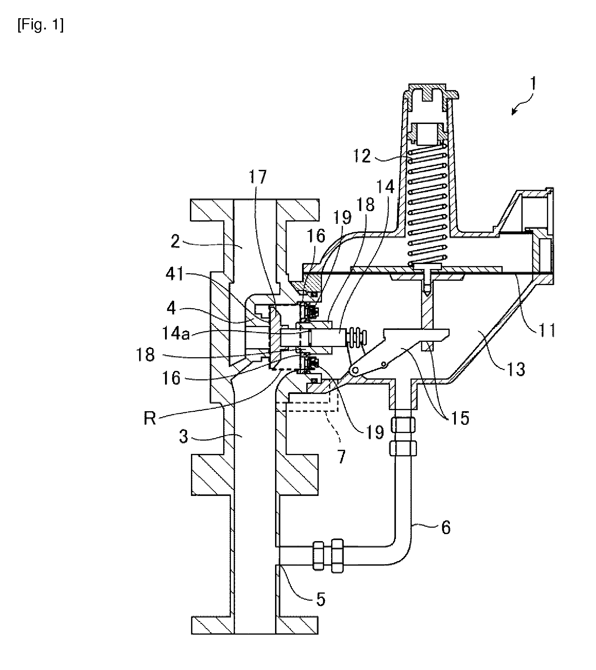

FIG. 1 is a cross-sectional view showing a governor 1 according to Embodiment 1 of the present invention. The governor 1 provided between a primary side channel 2 and a secondary side channel 3 opens and closes a port 4 positioned between the primary side channel 2 and the secondary side channel 3, and while adjusting the pressure in the secondary side channel 3, it causes fluid (for example, gasoline) to flow from the primary side channel 2 to the secondary side channel 3.

The governor 1 has inside it a diaphragm 11, whose circumferential edge is fixed, and a spring 12 is provided in one space (the upper side on the page) partitioned by the diaphragm 11, and a pressure detection chamber 13 is formed in the other space (the lower side on the page). The pressure detection chamber 13 is connected to the secondary side channel 3 via an adjusting tube 6 (illustrated as a plan view), which connects with the secondary side channel 3 at the connection 5, and is capable of conducting pressure from the secondary side channel 3.

A connecting part 15, which connects the diaphragm 11 and the valve stem 14, and transmits the displacement of the diaphragm 11 to the valve stem 14, is provided in the pressure detection chamber 13. The valve stem 14 is connected to the connecting part 15 at one end (right side on the page), and penetrates through a shield plate 16, which partitions the pressure detection chamber 13 and the secondary side channel 3, and at the other end (left side on the page), a valve 17 is provided to open and close a port 4, touching and separating from a valve seat 41 provided at the port 4. FIG. 1 shows a closed state of the valve 17, which is in contact with the valve seat 41. A bearing 18 is provided in a through-hole of the shield plate 16, which penetrates the valve stem 14, and the valve stem 14 is supported by the bearing 18 thereof. In addition, at part of the outer circumferential surface of the valve stem 14, an O-ring 14a is inserted in order to seal the gap between the outer circumferential surface of the valve stem 14 and the inner circumferential surface of the bearing 18. Furthermore, the governor 1 may also be configured without the O-ring 14a.

A non-return valve 19 is provided at the shield plate 16 to prevent the passage of fluid from the pressure detection chamber 13 to the secondary side channel 3 while allowing the passage of fluid from the secondary side channel 3 toward the pressure detection chamber 13.

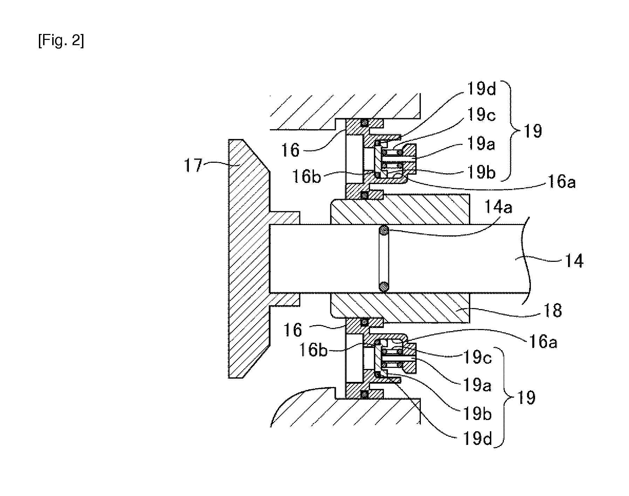

FIG. 2 shows an enlarged cross-sectional view of key parts in the vicinity of the shield plate 16. In the shield plate 16, a through-hole 16a is formed, passing from the surface of the secondary side channel 3 to the surface of the pressure detection chamber 13. Inside the through-hole 16a, an umbrella-like non-return valve 19 is provided including a valve stem 19a and a valve body 19b provided at the edge of the valve stem 19a at the secondary side channel 3 side. The non-return valve 19 is biased to the secondary side channel 3 side by a spring 19c, and the valve body 19b is pushed against an inner wall 16b of the through-hole 16a, which functions as the valve seat surface. Inside valve body 19b, an O-ring 19d is provided at a portion that comes into contact with the inner wall 16b to thereby improve the sealing performance.

In the non-return valve 19 configured in this manner, if the pressure on the secondary side channel 3 side as viewed from the non-return valve 19 increases by a prescribed amount or more above the pressure on the pressure detection chamber 13 side, this pressure difference opposes the biasing force of the spring 19c and causes the valve body 19b to move away from the inner wall 16b, and fluid is passed from the secondary side channel 3 toward the pressure detection chamber 13. In addition, the prescribed amount thereof, which is used as a standard for opening the non-return valve 19, is set in accordance with the biasing force of the spring 19c, or in other words, with the specifications of the spring 19c.

If the pressure on the secondary side channel 3 side as viewed from the non-return valve 19 does not rise to the prescribed amount above the pressure on the pressure detection chamber 13 side, because the biasing force of the spring 19c causes the valve body 19b to push against the inner wall 16b, fluid is not passed from the secondary side channel 3 toward the pressure detection chamber 13. If the pressure on the pressure detection chamber 13 side as viewed from the non-return valve 19 rises above the pressure on the secondary side channel 3 side, this pressure difference and the biasing force of the spring 19c cause the valve body 19b to push against the inner wall 16b, and therefore fluid is not passed from the pressure detection chamber 13 toward the secondary side channel 3.

Next, the operation of the governor 1 is explained. When a demand for fluid arises downstream from the secondary side channel 3 and the pressure in the secondary side channel 3 drops, the pressure in the pressure detection chamber 13, which is connected to the secondary side channel 3 through the adjusting tube 6 also drops, and as a result, the diaphragm 11 is biased by the spring 12 and is displaced in the downward direction of the page. When the diaphragm 11 is displaced downward, the connecting part 15 acts so as to move the valve stem 14 in a direction to the right on the page, and to move the valve body 17 away from the valve seat 41. Thus, the port 4 is opened and a valve opened state is achieved.

If further demand for fluid arises and the pressure in the secondary side channel 3 drops even more, the diaphragm 11 is further displaced downward, the valve body 17 moves further away from the valve seat 41 and the opening grows bigger, and as a result, the pressure in the secondary side channel 3 is increased. If the demand for fluid decreases and the pressure in the secondary side channel 3 rises, the diaphragm 11 receives the rise in pressure in the pressure detection chamber 13 and is displaced upwards, the valve body 17 moves towards the valve seat 41, and the opening becomes smaller, and as a result, the pressure in the secondary side channel 3 is reduced. In such a way, the governor 1 adjusts the pressure in the secondary side channel 3. Furthermore, because during this operation there is almost no pressure difference before and after the non-return valve 19, the fluid in the secondary side channel does not flow into the pressure detection chamber 13 through the non-return valve 19.

Incidentally, with the governor 1, in addition to the pressure fluctuation within the secondary side channel 3 caused by the demand for fluid, which arises downstream of the secondary side channel as described above, pressure fluctuation also occurs within the primary side channel 2. Pressure fluctuation in the primary side channel 2 originates in the opening and closing of a valve (not illustrated) provided upstream of the primary side channel 2, and especially if the opening of this valve suddenly grows, the pressure in the primary side channel 2 abruptly rises. When the pressure in the primary side channel 2 abruptly rises and high-pressure fluid starts to pass through the port 4, the pressure of the port 4 within the secondary side channel 3 and of the portion surrounding the shield plate 16 (hereinafter, these parts are referred to as "space R") abruptly rises. In other words, if the pressure on the secondary side channel 3 as viewed from the non-return valve 19 rises above the pressure in the pressure detection chamber 13 by more than a prescribed amount, the fluid that passes port 4 and reaches the space R flows into the pressure detection chamber 13 through the non-return valve 19. As a result, the pressure in the pressure detection chamber 13 rises and the diaphragm 11 is pushed in the upward direction of the page, the valve body 17 moves toward the valve seat 41, and the governor 1 enters a state of a closed valve.

Thus, because the fluid from the primary side channel 2, which has passed through the port 4, immediately enters the pressure detection chamber 13 through the non-return valve 19 provided at the shield plate 16, the valve body 17 is seated and the governor 1 enters a state of a closed valve shortly after the beginning of the high-pressure fluid passage through the port 4, and the responsiveness of the governor 1 to pressure fluctuation in the primary side channel 2 is therefore improved. Furthermore, because the governor 1 enters a closed valve state within such a short time, the amount of high-pressure fluid that passes through the port 4 is decreased, and because this high-pressure fluid, which passed through the port 4, flows into the pressure detection chamber 13 through the non-return valve 19, the pressure in the pressure detection chamber 13 can be prevented from sharply rising.

Through these measures, when the pressure in the primary side channel 2 rapidly rises, the diaphragm 11 is rapidly pushed up, preventing a large force from suddenly impacting the connecting part 15 and damaging the connecting part 15, while the pressure fluctuation in the secondary side channel 3 can be alleviated.

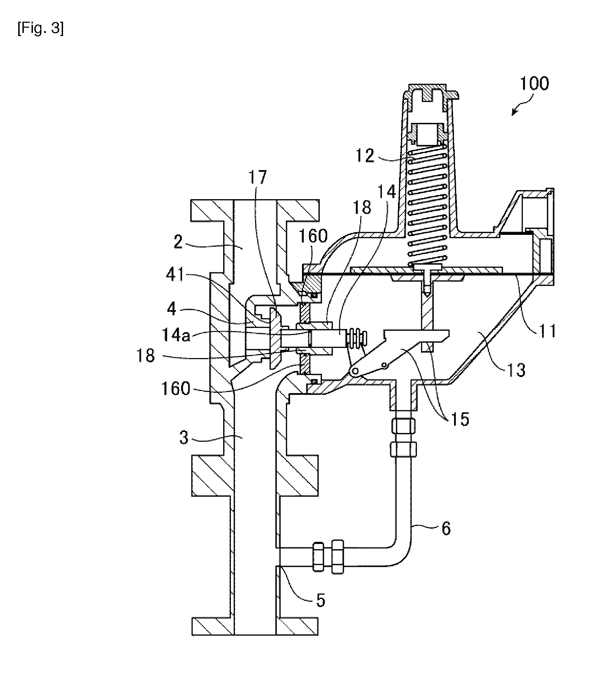

FIG. 3 is a cross-sectional view showing a governor 100 as a reference example to facilitate an understanding of the governor 1 according to Embodiment 1 of the present invention. In addition, in FIG. 3, the same reference numerals were assigned to the same or corresponding parts as in FIG. 1, and their descriptions are omitted or simplified.

The governor 100, shown as a reference, differs from the governor 1 in that a non-return valve like that of the governor 1 is not provided at the shield plate 160. That is, the shield plate 160 completely shields the secondary side channel 3 and the pressure detection chamber 13, and with the governor 100, fluid flows into the pressure detection chamber 13 only through the adjusting tube 6.

With the governor 100 configured as described above, when the pressure in the primary side channel 2 rapidly rises and high-pressure fluid passes through the port 4, the high-pressure fluid passes through the secondary side channel 3 and the adjusting tube 6 and eventually flows into the pressure detection chamber 13, and the governor 100 enters a closed valve state. In other words, time passes from the startup of high-pressure fluid passage through the port 4 until the governor 100 enters a closed valve state by only the extent of the high-pressure fluid passing through the secondary side channel 3 and the adjusting tube 6, and therefore the responsiveness of the governor 100 to pressure fluctuation in the primary side channel 2 deteriorates. Moreover, since time passes until the governor 100 enters a closed valve state, a large amount of high-pressure fluid passes through the port 4, and because the configuration is not such that the same degree of resistance to the fluid flow as the non-return valve 19 is provided, by the time that the large amount of high-pressure fluid that has passed through the port 4 passes through the secondary side channel 3 and the adjusting tube 6 and reaches the pressure detection chamber 13, the pressure in the pressure detection chamber 13 sharply rises all at once.

As a result, when the pressure in the primary side channel 2 rapidly rises, the diaphragm 11 is suddenly pushed upward, and a large force abruptly acts on the connecting part 15 and damages the connecting part 15, and the pressure fluctuation in the primary side channel 2 is accompanied by significant fluctuation within the secondary side channel 3 as well.

In contrast, the governor 1 according to Embodiment 1 of the present invention is provided with a non-return valve 19 at the shield plate 16. Because the fluid from the primary side channel 2 flows into the pressure detection chamber 13 through this non-return valve 19 faster than through the secondary side channel 3 and the adjusting tube 6, the governor 1 enters a closed valve state within a short amount of time. Therefore, when the pressure in the primary side channel 2 rapidly rises, the diaphragm 11 is not suddenly pushed upward, a large force does not abruptly impact the connecting part 15 and damage the connecting part 15, and the pressure fluctuation in the primary side channel 2 is not accompanied by significant fluctuation in the secondary side channel 3.

Note that with the above-described governor 1, a case was described for which the non-return valve 19 is provided at the shield plate 16, but the position at which the non-return valve 19 is provided is not limited thereto. For example, the pressure detection chamber 13 and the secondary side channel 3 can be connected by a branch pipe 7 (shown by the dotted line in FIG. 1), which is connected to the secondary side channel 3 at a position closer to the primary side channel 2 than the adjusting tube 6, which is connected to the secondary side channel 3 at the connection 5, and a non-return valve 19 may be provided at the branch pipe 7 such that fluid flows only in a direction from the secondary side channel 3 side to the pressure detection chamber 13 side. That is, the non-return valve 19 may be provided further to the primary side channel 2 side than the connection 5 such that fluid that passes through the port 4 may flow to the pressure detection chamber 13 faster than through the adjusting tube 6, and the non-return valve 19 can pass the fluid to the pressure detection chamber 13 further upstream than the adjusting tube 6.

Furthermore, although two non-return valves 19 were illustrated and described above, the number of the non-return valves installed may be appropriately designed according to the properties of the non-return valve 19, such as the minimum differential pressure necessary to open the valve.

Moreover, although a spring-type non-return valve was used as the non-return valve 19 in the example above, other non-return valves, such as a ball-type non-return valve, may also be used.

As described above, according to the governor 1 of the Embodiment 1 of the present invention, the non-return valve 19 is provided further at the primary side channel 2 side than the connection 5, and the non-return valve 19 is capable of passing fluid from the primary side channel 2 further upstream than the adjusting tube 6 to the pressure detection chamber 13. As a result, when the pressure in the primary side channel 2 rapidly rises, the governor 1 enters a closed valve state within a short amount of time, and the diaphragm 11 is rapidly pushed upward, thereby preventing a large force from suddenly acting on the connecting part 15 and damaging the connecting part 15, while the pressure fluctuation within the secondary side channel 3 can be alleviated.

In addition, a shield plate 16, which partitions the pressure detection chamber 13 and the secondary side channel 3, is provided, the valve stem 14 penetrates the shield plate 16 with the valve body 17 in a state of being arranged in the secondary side channel 3, and the non-return valve 19 is provided in the shield plate 16. Therefore, when pressure fluctuation is generated in the primary side channel 2, because a non-return valve 19 is provided in the shield plate 16 near the port 4, which is readily impacted by pressure fluctuation, when the pressure in the primary side channel 2 rapidly rises, the governor 1 enters a closed valve state within a particularly short amount of time.

In addition, within the scope of the invention of the present application, any structural component of the embodiment can be changed and any structural component of the embodiment can be omitted.

### [Explanation of Reference Numerals]

- 1: governor
- 2: primary side channel
- 3: secondary side channel
- 4: port
- 5: connection
- 6: adjusting tube
- 7: branch pipe
- 11: diaphragm
- 12: spring
- 13: pressure detection chamber
- 14: valve stem
- 14a: O-ring
- 15: connecting part
- 16: shield plate
- 16a: through-hole
- 16b: inner wall
- 17: valve body
- 18: bearing
- 19: non-return valve
- 19a: valve stem
- 19b: valve body
- 19c: spring
- 19d: O-ring
- 41: valve seat
- 100: governor
- 160: shield plate

## Claims

1. A governor (1) provided between a primary side channel (2) and a secondary side channel (3) through which fluid flows, the governor (1) thereof comprising:
a pressure detection chamber (13) connecting to the secondary side channel (3) through an adjusting tube (6);
a diaphragm (11) dividing the inside and outside of the pressure detection chamber (13) and which is adapted to be displaced according to the pressure in the pressure detection chamber (13);
a valve stem (14) provided at one end of a valve body (17) and which is adapted to move in accordance with the displacement of the diaphragm (11);
a connecting part (15) connecting the diaphragm and the valve stem and which is adapted to transmit the diaphragm displacement to the valve stem (14); and
a non-return valve (19) provided further upstream than the connection between the secondary side channel (3) and the adjusting tube (6) and which is adapted to send the fluid inside the secondary side channel (3) to the pressure detection chamber (13).

2. The governor (1) according to claim 1, further provided with a shield plate (16) partitioning the pressure detection chamber (13) and the secondary side channel (3);
wherein the valve stem (14) penetrates the shield plate (16), with the valve body (17) in a state of being arranged within the secondary side channel (3); and
the non-return valve (19) is provided at the shield plate (16).
